# EUROPÄISCHE PATENTANMELDUNG

(11) **EP 3 111 765 A1**
(43) Veröffentlichungstag der Anmeldung: **04.01.2017**
(21) Anmeldenummer: 15174941.3
(22) Anmeldetag: 02.07.2015
(51) Int. Cl.: A01N 63/04, A01P 13/02

(54) **CONIOTHYRIUM MINITANS ZUR VERWENDUNG GEGEN MOOSWACHSTUM**

(71) Anmelder: Bayer CropScience AG, 40789 Monheim am Rhein (DE)
(72) Erfinder: Die Erfindernennung liegt noch nicht vor
(74) Vertreter: BIP Patents

(57) **Zusammenfassung**

Die Erfindung bezieht sich auf die Verwendung von Coniothyrium minitans zur Bekämpfung von Mooswachstum sowie ein Verfahren zur Bekämpfung von Mooswachstum, umfassend Aufbringen von Coniothyrium minitans auf ein von Moosen frei zu haltendes Areal.

## Beschreibung

Mooswachstum wird manchenorts als lästig angesehen und ist an vielen Plätzen, z.B. auf Rasenflächen oder an Bäumen und auf asphaltierten oder gepflasterten oder anders befestigten Böden sowie auf Hausdächern unwillkommen.
Verfahren zur Kontrolle von Mooswachstum schließen physikalische Entfernung sowie chemische Behandlung oder eine Kombination aus diesen Methoden ein. Vor allem chemische Methoden haben häufig Nebenwirkungen, wie z.B. Schäden an anderen Pflanzen, Fleckenbildung, Korrosion oder Luft und/oder Wasserverschmutzung (Davison and Byther, 1999; Algae, Lichens and Mosses on Plants. Pacific Northwest Plant Disease Control Handbook. p. 39). Überdies ist die Wirksamkeit vieler Herbizide gegen Moose nicht gut untersucht. Nicht zuletzt machen auch die einzuhaltenden Sicherheitsvorschriften die Handhabung, Dosierung und Lagerung chemischer Mittel aufwändiger.

Der Pilz *Coniothyrium minitans* wurde erstmals 1947 identifiziert und ist weltweit in Böden zu finden. Er greift Sklerotien (überwinternde oder Überlebensstrukturen) von *Sclerotinia sclerotiorum* und *Sclerotinia minor,* anderen *Sclerotinia* Arten sowie *Sclerotium cepivorum* an und zerstört sie. Diese Pflanzenpathogene haben eine Spanne an Wirtspflanzen, vor allem auch Nutzpflanzen, und richten dort beträchtliche Schäden an.

Im Hinblick auf die nicht optimalen Möglichkeiten zur Moosbekämpfung sowie auf die angestrebte Verminderung von Wasser- und Luftverschmutzung durch Herbizide sollten alternative und schonendere Methoden zur Kontrolle von Moosen gefunden werden.

Dieses technische Problem wird durch die vorliegende Erfindung wie in den Ansprüchen definiert gelöst.

Die vorliegende Erfindung bezieht sich auf die Verwendung von *Coniothyrium minitans* zur Bekämpfung oder Verhinderung von Mooswachstum, z.B. in Nutzpflanzenkulturen oder an Plätzen wie befestigten Plätzen, auf denen Mooswachstum unerwünscht ist.

*Coniothyrium minitans* ist bislang ausschließlich als gegen Sclerotinia Spezies wirksames biologisches Fungizid bekannt. Im Zuge der vorliegenden Erfindung wurde jedoch festgestellt, dass der Pilz auch das Mooswachstum hemmt bzw. vorhandenes Moos zum Absterben bringt. Hierbei ist zu beachten, dass der Effekt tatsächlich auf den Pilz zurückzuführen ist und nicht etwa auf die Anwesenheit von Formulierungshelfern (siehe Beispiel).

Erfindungsgemäß können alle zur Spezies *Coniothyrium minitans* gehörigen Stämme verwendet werden, die Mooswachstum hemmende oder Moos bekämpfende Eigenschaften haben.

Ein besonders bevorzugter Stamm von *Coniothyrium minitans* ist CON/M/91-08 (beschrieben in WO 96/21358), welcher unter der Zugangsnummer DSM9660 bei der Deutschen Sammlung für Mikroorganismen und Zellkulturen in Braunschweig hinterlegt wurde. Der Stamm wird als biologisches Pflanzenschutzmittel gegen die Pilze *Sclerotinia sclerotiorum* und *Sclerotinia minor* verwendet, die Verursacher der Weißstängeligkeit sind, und ist unter dem Handelsnamen Contans^{®} erhältlich.

*Coniothyrium minitans* Stamm CON/M/91-08 kann, wie andere *Coniothyrium minitans* Stämme auch, beispielsweise wie in WO 96/21358 beschrieben kultiviert werden, welche hiermit durch Verweis mit einbezogen wird. Beispielsweise kann *Coniothyrium minitans* auf geeigneten Substraten wie z.B. Samen von Getreide, Kleie, Stroh oder anderen Pflanzenmaterialien kultiviert werden oder auch mit Hilfe von in der Pilzkultur üblichem Agar-Kulturmedium, z.B. Kartoffel-Dextrose-Agar, oder Malz-Pepton-Agar, oder auf geeigneten Stützmaterialien, denen eine Kulturmedium hinzugefügt wurde; sowie in flüssigen Nähnnedien ohne Verwendung von Agar.

Üblicherweise wird der Stamm auf einem Trägerstoff formuliert, bevorzugt einem wasserlöslichen Zuckerträger. Bevorzugt ist der wasserlösliche Träger Glucose oder Traubenzucker.

Neben *Coniothyrium minitans* CON/M/91-08 sind auch Mutanten dieses Stammes umfasst, die dieselben Eigenschaften bezüglich Mooswachstum haben wie CON/M/91-08.

Moose sind grüne Landpflanzen, die sich in Hornmoose, Lebermoose und Laubmoose untergliedern lassen. *Coniothyrium minitans* ist gegen Moose im Allgemeinen wirksam, insbesondere jedoch gegen Laubmoose wie z.B. Widertonmoose.

Moose wachsen bisweilen an Plätzen, wo Nutz- oder Zierpflanzen angebaut werden. Insbesondere zu nennen ist hier Rasen wie er in Parks, auf Golfplätzen, Sportanlagen oder in Gärten vorkommt. Rasen wird zudem häufig als Roll- oder Fertigrasen verkauft, der ebenfalls anfällig für Mooswachstum ist.

Andere Orte, an denen Mooswachstum unerwünscht ist, sind bestimmte, auch befestigte Areale oder Plätze wie z.B. geflieste, gepflasterte oder asphaltierte Bereiche, wo sich Moose in Fugen oder unbeabsichtigten Lücken ansiedeln.

In einer bevorzugten Ausführungsform werden Sporen von Coniothyrium minitans verwendet.

Von Coniothyrium minitans gebildete Sporen sind Konidien (asexuell gebildete Sporen), die in Pyknidien gebildet werden und die auch Pynidiosporen oder Pycnosporen genannt werden.

In einer weiteren bevorzugten Ausführungsform erfolgt die Verwendung auf Rasen.

In einer weiteren bevorzugten Ausführungsform erfolgt die erfindungsgemäße Verwendung in Gärten, Parks, Sportanlagen, an Terrassen, Bürgersteigen und ansonsten pflanzenfreien Plätzen.

In noch einer bevorzugten Ausführungsform erfolgt die Verwendung in Kombination mit mindestens einem Herbizid, das bevorzugt gegen Moose wirksam ist.

In einer weiter bevorzugten Ausführungsform ist das Herbizid ausgewählt aus der Gruppe bestehend aus Dodecyldimethylammoniumchlorid, ACN(2-amino-3-chloro-1,4-naphtoquinon), Carfentrazone-ethyl, Lauroyl Methyl-[beta]-Alanin Natrium, Ferrous Ammonium Sulfate, Kupferhydroxid, Mancozeb, Propineb, Oxadiazon, Formaldehyd und Chlorothalonil.

In einer weiteren besonders bevorzugten Ausführungsform erfolgt die erfindungsgemäße Verwendung mit mindestens einem Herbizid gleichzeitig oder alternierend.

In einer bevorzugten Ausführungsform beträgt die Aufbringungsrate zwischen 2 und 2000 kg/ha. Bevorzugte Bereiche umfassen eine Aufbringungsrate von zwischen ca. 10 und ca. 500 kg/ha, weiter bevorzugt zwischen ca. 20 und 200 kg/ha, z.B. 30, 40, 50, 100 oder 150 kg/ha.

In einer weiteren bevorzugten Ausführungsform liegt die Sporenkonzentration in der aufgebrachten Formulierung zwischen 1×10⁸ und 1×10¹⁰ /g.
Die Sporen können in einer Konzentration zwischen ca. 1 × 10⁷ und ca. 1 × 10¹⁵ Sporen/g Träger vorliegen, bevorzugt zwischen ca. 1 × 10¹ und ca. 1 × 10¹³ Sporen/g Träger. Die am meisten bevorzugte Konzentration liegt zwischen ca. 1 × 10⁸ und ca. 1 × 10¹⁰ Sporen/g Träger, z.B. ca. 1 × 10⁹ Sporen/g Träger.

In noch einer bevorzugten Ausführungsform ist die erfindungsgemäße Verwendung präventiv.

In einem weiteren Aspekt bezieht sich die Erfindung auf ein Verfahren zur Bekämpfung von Moosen, umfassend Aufbringen von Coniothyrium minitans auf ein von Moosen frei zu haltendes Areal, wie z.B. eine Nutzpflanzenkultur oder Plätze wie befestigte Plätze.

Zur Beschreibung der bevorzugten Ausführungsformen dieses Aspektes der Erfindung können diejenigen des ersten Aspekts der Erfindung herangezogen werden.

In einer bevorzugten Ausführungsform wird der Coniothyrium minitans Stamm CON/M/91-08 verwendet.

In einer bevorzugten Ausführungsfonn des erfindungsgemäßen Verfahrens werden Sporen von Coniothyrium minitans verwendet.

In einer weiteren bevorzugten Ausführungsfonn erfolgt das Aufbringen auf und/oder in den Boden bzw. das zu behandelnde Areal.

In einer anderen bevorzugten Ausführungsform erfolgt das Aufbringen auf Rasen.

In einer weiteren bevorzugten Ausführungsform wird das erfindungsgemäße Verfahren in Gärten, Parks, Sportanlagen, an Terrassen, Bürgersteigen und ansonsten pflanzenfreien Plätzen angewendet.

In einer weiteren bevorzugten Ausführungsfonn erfolgt das Aufbringen von *Coniothyrium minitans* in Kombination mit mindestens einem Herbizid, das gegen Moose wirksam ist.

In einer besonders bevorzugten Ausführungsform ist das Herbizid ausgewählt aus der Gruppe bestehend aus Dodecyldimethylammoniumchlorid, ACN(2-amino-3-chloro-1,4-naphtoquinone), Carfentrazone-ethyl, Lauroyl Methyl-[beta]-alanine Sodium, Ferrous Ammonium Sulfate, Copper hydroxide, Mancozeb, Propineb, Oxadiazon, Fonnaldehyd und Chlorothalonil.

In einer weiteren besonders bevorzugten Ausführungsform erfolgt die Aufbringung von *Coniothyrium minitans* und mindestens einem Herbizid gleichzeitig oder alternierend.

In einer bevorzugten Ausführungsfonn des erfindungsgemäßen Verfahrens beträgt die Aufbringungsrate zwischen 2 und 2000 kg/ha.

In einer weiteren bevorzugten Ausführungsform liegt die Sporenkonzentration in der aufgebrachten Formulierung zwischen 1×10⁷ und 1×10¹⁰ /g.

In noch einer bevorzugten Ausführungsfonn ist das erfindungsgemäße Verfahren präventiv.

Die folgenden Beispiele beschreiben die Erfindung in nicht limitierender Form.

### Beispiel 1: Drench Test

Der Test wurde unter Gewächshaus-Bedingungen durchgeführt.
In 5,5 cm große transparente zylindrische Gefäße wurden 120ml eines Gemisches aus gedämpfter Felderde und Sand (1:1) gefüllt.

Die Testfonnulierung, das Produkt Contans^{®}, enthaltend 1×10⁹ Sporen des Stammes Coniothyrium minitans CON/M/91-08, wurde in Wasser gelöst und mit Wasser auf die gewünschten Konzentrationen verdünnt. 20ml der angesetzten Lösungen wurden auf die Erde in den Gefäßen pipettiert.
Die Gefäße wurden mit einem transparenten Deckel zu gedeckelt.
Die Gefäße blieben die nächsten 19 Wochen im Gewächshaus bei 15°C bei natürlichen Lichtbedingungen stehen. Die Deckel wurden nach ca. 2 Wochen leicht geöffnet und die Erde wurde alle 3 Wochen bewässert und feucht gehalten.
Die Auswertung erfolgte durch Abschätzung der inzwischen mit überwiegend Widertonmoos bewachsenen Erdoberfläche pro Gefäß. Dabei bedeutet 0% ein Wirkungsgrad, der demjenigen der unbehandelten Kontrolle entspricht, während ein Wirkungsgrad von 100% bedeutet, dass kein Mooswachstum zu erkennen war.
In diesem Test zeigen die nachfolgenden Formulierungen eine Effizienz von bis zu 100% bei einer Dosis von 200kg/ha (siehe Tabelle 1).

**Tabelle 1**

| | Konzentration | Effizienz % |
|---|---|---|
| Kontrolle | | 0* |
| Contans** | 2kg/ha = 0,024mg/ml | 50 |
| Contans** | 20kg/ha = 0,24mg/ml | 38 |
| Contans** | 200kg/ha = 2,4mg/ml | 100 |
| Glucose | 200kg/ha = 2,4mg/ml | 13 |
| DDAC-C10*** | 6,25kg/ha = 20µl/ml | 100 |

Die verwendeten Sporen von Coniothyrium minitans sind an Glucose gebunden. Um einen potentiellen Effekt von Glucose auf das Mooswachstum auszuschließen, wurde ein Versuch mit Glucose durchgeführt, der zeigt, dass der Effekt nicht auf die Glucose zurückzuführen ist.
*Mooswachstum: 80% der Fläche
** Coniothyrium minitans CON/M/91-08; 5×10⁸ lebensfähige Sporen/g
***Didecyldimethylammoniumchlorid mit Alkylkettenläge C10

## Patentansprüche

1. Verwendung von Coniothyrium minitans zur Bekämpfung oder Verhinderung von Mooswachstum.

2. Verwendung nach Anspruch 1, wobei der Stamm CON/M/91-08 ist.

3. Verwendung nach Anspruch 1 oder 2, wobei Sporen von Coniothyrium minitans verwendet werden.

4. Verwendung nach einem der Ansprüche 1 bis 3, die auf Rasen erfolgt.

5. Verwendung nach einem der Ansprüche 1 bis 3, die in Gärten, Parks, Sportanlagen, an Terrassen, Bürgersteigen und ansonsten pflanzenfreien Plätzen erfolgt.

6. Verwendung nach einem der Ansprüche 1 bis 5, wobei die Verwendung in Kombination mit mindestens einem Herbizid erfolgt, das bevorzugt gegen Moose wirksam ist.

7. Verwendung nach Anspruch 6, wobei das Herbizid ausgewählt ist aus der Gruppe bestehend aus Dodecyldimethylammoniumchlorid, ACN(2-amino-3-chloro-1,4-naphtoquinone), Carfentrazone-ethyl, Lauroyl Methyl-[beta]-alanine Sodium, Ferrous Ammonium Sulfate, Copper hydroxide, Mancozeb, Propineb, Oxadiazon, Formaldehyd und Chlorothalonil.

8. Verwendung nach Anspruch 6 oder 7, wobei die Verwendung mit mindestens einem Herbizid gleichzeitig oder alternierend erfolgt.

9. Verwendung nach einem der Ansprüche 1 bis 8, wobei die Aufbringungsrate zwischen 2 und 2000 kg/ha beträgt.

10. Verwendung nach Anspruch 9, wobei die Sporenkonzentration in der aufgebrachten Formulierung zwischen 1×10⁷ und 1×10¹⁰ /g liegt.

11. Verwendung nach einem der Ansprüche 1 bis 10, die präventiv ist.

12. Verfahren zur Bekämpfung von Mooswachstum, umfassend Aufbringen von Coniothyrium minitans auf ein von Moosen frei zu haltendes Areal.

13. Verfahren nach Anspruch 12, wobei Sporen von Coniothyrium minitans verwendet werden.

14. Verfahren nach Anspruch 12, wobei das Aufbringen auf und/oder in den Boden erfolgt.

15. Verfahren nach einem der Ansprüche 12 bis 14, wobei das Aufbringen auf Rasen erfolgt.

16. Verfahren nach einem der Ansprüche 12 bis 15, wobei das Aufbringen von Coniothyrium minitans in Kombination mit mindestens einem Herbizid erfolgt, das gegen Moose wirksam ist.

17. Verfahren nach Anspruch 16, wobei das Herbizid ausgewählt ist aus der Gruppe bestehend aus Dodecyldimethylammoniumchlorid, ACN(2-amino-3-chloro-1,4-naphtoquinone), Carfentrazone-ethyl, Lauroyl Methyl-[beta]-alanine Sodium, Ferrous Ammonium Sulfate, Copper hydroxide, Mancozeb, Propineb, Oxadiazon, Formaldehyd und Chlorothalonil.

18. Verfahren nach Anspruch 16 oder 17, wobei die Aufbringung von Coniothyrium minitans und mindestens einem Herbizid gleichzeitig oder alternierend erfolgt.

19. Verfahren nach einem der Ansprüche 12 bis 18, wobei die Aufbringungsrate zwischen 2 und 2000 kg/ha beträgt.

20. Verfahren nach Anspruch 19, wobei die Sporenkonzentration in der aufgebrachten Formulierung zwischen 1×10⁷ und 1×10¹⁰ /g liegt.

21. Verfahren nach einem der Ansprüche 12 bis 20, wobei das Aufbringen als präventive Maßnahme erfolgt.
